# EUROPÄISCHE PATENTSCHRIFT

(11) **EP 1 455 151 B1**
(45) Veröffentlichungstag und Bekanntmachung des Hinweises auf die Patenterteilung: **07.06.2006**
(21) Anmeldenummer: 04004914.0
(22) Anmeldetag: 03.03.2004
(51) Int. Cl.: F25D 13/06, F25D 25/04

(54) **Verfahren zum Kühlen von Gut, insbesondere von Lebensmitteln, vorzugsweise von Molkereiprodukten, sowie Vorrichtung zur Durchführung des Verfahrens**
Method for cooling products, in particular food, especially dairy products, and device for carrying out the method
Procédé pour refroidir des produits, notamment d'aliments, en particulier des produits laitiers, et dispositif pour sa mise en oeuvre

(30) Priorität: 07.03.2003 DE 10310983
(43) Veröffentlichungstag der Anmeldung: 08.09.2004
(73) Patentinhaber: M+W Zander Gebäudetechnik GmbH, 70499 Stuttgart (DE)
(72) Erfinder: Lembke, Christian, 21335 Lüneburg (DE)
(74) Vertreter: Bauer, Dirk

(56) Entgegenhaltungen:
- GB-A- 1 369 093
- US-A- 2 474 069
- US-A- 5 317 818
- US-A- 5 845 765
- US-A- 6 129 428
- US-A1- 2003 041 614
- "GEAUTOMATISEERD VRIESHUIS" PT PROCESTECHNIEK, STAM TIJDSCHRIFTEN, RIJSWIJK, NL, Bd. 44, Nr. 3, 1. März 1989 (1989-03-01), Seiten AK09-AK12, XP000028741

## Beschreibung

Die Erfindung betrifft ein Verfahren zum Kühlen von Gut, insbesondere von Lebensmitteln, vorzugsweise von Molkereiprodukten, nach dem Oberbegriff des Anspruches 1 sowie eine Vorrichtung zur Durchführung eines solchen Verfahrens nach dem Oberbegriff des Anspruches 7.

Es ist bekannt, zu kühlendes Gut in einem Kühlraum auf Lagerplätzen abzulegen. Der Kühlstrom wird über das ruhende Gut geleitet. Probleme treten auf, wenn unterschiedliches Gut im Kühlraum gelagert ist, das unterschiedlich lange Kühlzeiten benötigt. Während das eine Gut bereits ausreichend gekühlt ist, benötigt das andere Gut eine längere Kühlzeit.

Es ist auch bekannt, das zu kühlende Gut mit einer Transporteinrichtung durch einen Kühlbereich zu transportieren und während des Transportes mit dem Kühlstrom zu beaufschlagen. Die Transportgeschwindigkeit richtet sich nach dem Gut, das die längste Kühlzeit benötigt. Dies hat zur Folge, daß dasjenige Gut, das eine geringere Kühlzeit benötigt, unnötig lang gekühlt wird.

Weitere Verfahren zum Kühlen sind aus US5845765 und "GEAUTOMATISEERD VRIESHVIS" PT PROCESTECHNIEK, STAM TIJDSCHRIFTEN, RIGSWIJK, NL, Bd.44, Nr. 3 1989-03-01 seiten AK09-AK12, bekannt.

Der Erfindung liegt die Aufgabe zugrunde, das gattungsgemäße Verfahren und die gattungsgemäße Vorrichtung so auszubilden, daß das zu kühlende Gut in konstruktiv einfacher Weise nur so lang gekühlt wird, wie zur Kühlung tatsächlich erforderlich ist.

Diese Aufgabe wird beim gattungsgemäßen Verfahren erfindungsgemäß mit den kennzeichnenden Merkmalen des Anspruches 1 und bei der gattungsgemäßen Vorrichtung erfindungsgemäß mit den kennzeichnenden Merkmalen des Anspruches 7 gelöst.

Beim erfindungsgemäßen Verfahren wird das Gut mit der Transporteinrichtung auf den jeweiligen Lagerplatz transportiert und dort abgelegt. Der Kühlstrom wird über dieses abgelegte Gut geleitet. Wenn es ausreichend gekühlt ist, wird es auf die Transporteinrichtung zurückgeführt und weitertransportiert. Auf diese Weise kann jedes Gut entsprechend seiner individuellen Kühlzeit mit dem Kühlstrom beaufschlagt und anschließend mit der Transporteinrichtung aus dem Kühlbereich transportiert werden.

Da die Lagerplätze neben der Transporteinrichtung vorhanden sind, läßt sich das Gut innerhalb kürzester Zeit mittels der Transporteinheit auf den Lagerplatz für den Kühlprozeß transportieren bzw. nach dem Kühlprozeß wieder auf die Transporteinrichtung zurückführen. Das Gut wird dann wieder mittels der Transporteinheit auf die Transporteinrichtung zurücktransportiert, wenn es ausreichend gekühlt ist. Damit kann jedes Gut individuell entsprechend seiner notwendigen Kühlzeit mit dem Kühlstrom beaufschlagt werden. Dadurch ist eine produkt- und durchsatzabhängige Regelung des Kühlstromes möglich. Der Energiebedarf der erfindungsgemäßen Vorrichtung kann auf diese Weise gering gehalten werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung und im Querschnitt eine erfindungsgemäße Kühlvorrichtung,
- Fig. 2: eine Draufsicht auf eine Produktebene der Kühlvorrichtung gemäß Fig. 1,
- Fig. 3: eine Draufsicht auf eine Aggregatebene der Kühlvorrichtung gemäß Fig. 1.

Die Kühlvorrichtung dient zum Kühlen von Lebensmitteln, insbesondere von Molkereiprodukten, wie Joghurt, Puddingspeisen und dergleichen. Die Kühlvorrichtung ist als Kühltunnel ausgebildet und hat ein Gehäuse 1 mit zueinander parallelen Seitenwänden 2, 3, Stirnwänden 4, 5 und einer Decke 6. Zwischen den Seiten- und den Stirnwänden 2 bis 5 erstreckt sich eine Zwischendecke 7, durch welche die Kühlvorrichtung in eine Produktebene 8 und eine Aggregatebene 9 unterteilt wird.

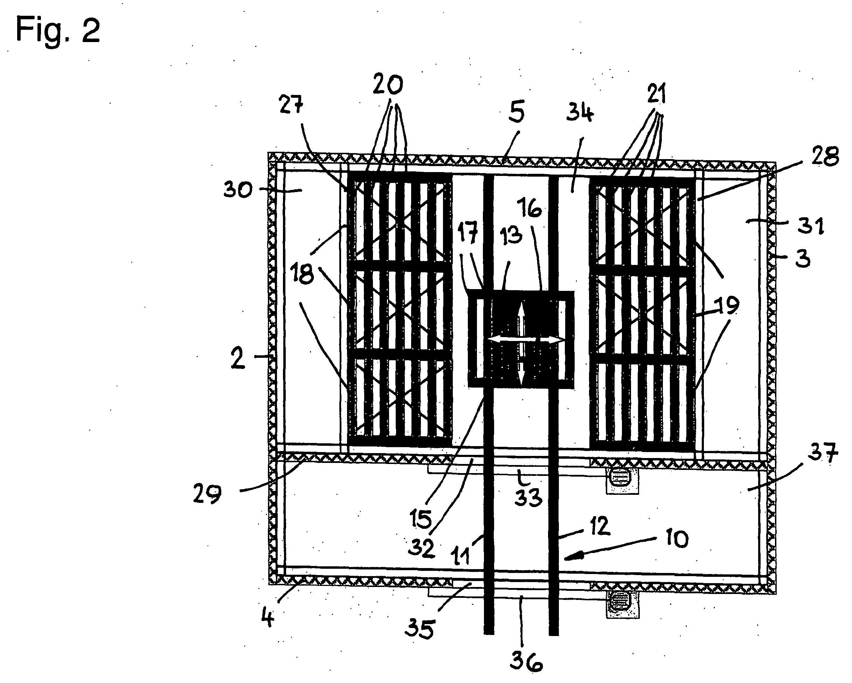

In der Produktebene 8 befindet sich eine mittig angeordnete Transporteinrichtung 10, mit der das zu kühlende Gut transportiert wird. Die Transporteinrichtung 10 kann in bekannter Weise ausgebildet sein. Im Ausführungsbeispiel hat sie parallel zueinander liegende, am Boden vorgesehene Schienen 11, 12, auf denen ein Schienenfahrzeug 13 verfahrbar ist. Auf dem Schienenfahrzeug 13 befindet sich eine Transporteinheit 14, mit der das zu kühlende Gut quer zur Verfahrrichtung 15 des Schienenfahrzeuges 13 in Pfeilrichtung 16 (Fig. 2) transportiert werden kann. Die Transporteinheit 14 kann durch drehbar angetriebene Rollen 17 gebildet sein, die parallel nebeneinander angeordnet sind und sich in Transportrichtung 15 erstrecken.

Beiderseits der Transporteinrichtung 10 befinden sich Lagerplätze 18, 19, auf denen das Gut während der Kühlung gelagert wird. Im Ausführungsbeispiel befinden sich zu beiden Seiten der Transporteinrichtung 10 jeweils drei Lagerplätze 18, 19. Es können je nach Größe der Kühlvorrichtung auch weitere Lagerplätze vorgesehen sein. Ebenso ist es möglich, auch weniger als drei Lagerplätze an jeder Seite der Transporteinrichtung 10 vorzusehen. Jeder Lagerplatz 18, 19 hat parallel zueinander liegende Rollen 20, 21, die vorteilhaft drehbar angetrieben sind. Die Rollen 20, 21 liegen parallel zu den Rollen 17 der Transporteinheit 14.

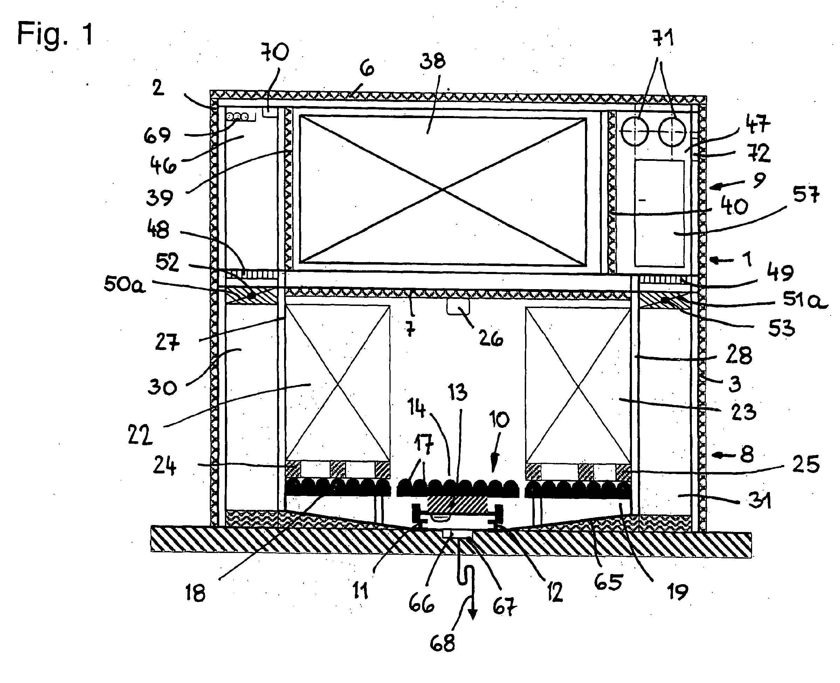

Das zu lagernde Gut 22, 23 (Fig. 1) befindet sich auf Paletten 24, 25. Sie liegen auf den Rollen 17 der Transporteinheit 14 auf und werden mit dem Schienenfahrzeug 13 so weit verfahren, daß die Palette auf den jeweiligen Lagerplatz 18 bzw. 19 transportiert werden kann. Hierzu werden die Rollen 17 der Transporteinheit 14 in der gewünschten Richtung drehbar angetrieben, wodurch die Palette 24, 25 mit dem zu kühlenden Gut 22, 23 auf den jeweiligen Lagerplatz 18 bzw. 19 transportiert wird.

Wenn das Gut 22, 23 ausreichend gekühlt ist, wird die Palette 24 bzw. 25 vom jeweiligen Lagerplatz 18, 19 zurück auf die Transporteinheit 14 gefördert. Mit dem Schienenfahrzeug 13 wird dann das gekühlte Gut 22, 23 aus dem Gehäuse 1 transportiert.

An der Zwischendecke 7 befindet sich eine Beleuchtung 26, mit der der Bereich der Produktebene 8 ausreichend beleuchtet werden kann.

Wie sich aus Fig. 2 ergibt, befinden sich die Lagerplätze 18, 19 vor einer Rückwand 27, 28, die beispielsweise aus Lochblechen besteht, mit Abstand parallel zu den Seitenwänden 2, 3 verläuft und sich zwischen der Stirnwand 5 und einer parallel zu ihr liegenden Zwischenwand 29 erstreckt. Sie liegt mit Abstand parallel zur Stirnwand 4 und verbindet die beiden Seitenwände 2, 3 miteinander. Die Rückwände 27, 28 erstrecken sich zwischen dem Boden und der Zwischendecke 7.

Die Rückwände 27, 28, die Seitenwände 2, 3, ein Teil der Stirnwand und der Zwischenwand 29 sowie ein Teil der Zwischendecke 7 begrenzen jeweils einen Strömungsraum 30, 31, über den Kühlluft dem Gut 22, 23 in noch zu beschreibender Weise zugeführt werden kann.

In der Zwischenwand 29 befindet sich eine Zutrittsöffnung 32, die durch ein Schnellauftor 33 geschlossen werden kann. Es läßt sich nach oben oder seitlich wegziehen, damit das Schienenfahrzeug 13 auf den Schienen 11, 12 in den Kühlraum 34, in dem sich die Lagerplätze 18, 19 befinden, fahren kann.

Die Stirnwand 4 ist mit einer weiteren Öffnung 35 versehen, die ebenfalls durch ein Schnellauftor 36 geschlossen werden kann. Es läßt sich ebenfalls nach oben oder seitlich wegziehen. Die Schienen 11, 12 der Transporteinrichtung 10 verlaufen auch durch diese Öffnung 35 nach außen. Zwischen der Stirnwand 4, der Zwischenwand 29, einem Teil der Seitenwände 2, 3 und einem Teil der Zwischendecke 7 wird ein Vorraum 37 gebildet, der durch das Schnellauftor 36 nach außen und durch das Schnellauftor 33 gegen den Kühlraum 34 geschlossen werden kann.

In der Aggregatebene 9 befindet sich ein Kühlregister 38, mit dem die Kühlluft auf die entsprechende Kühltemperatur gekühlt werden kann. Das Kühlregister 38 ist in bekannter Weise ausgebildet und erstreckt sich zwischen zwei vertikalen Zwischenwänden 39, 40, die sich zwischen der Zwischendecke 7 und der Decke 6 erstrecken und mit Abstand parallel zu den Seitenwänden 2, 3 verlaufen. Das Kühlregister 38 liegt mit Abstand zu einer Querwand 41, die sich zwischen den Seitenwänden 2, 3 sowie zwischen der Zwischendecke 7 und der Decke 6 erstreckt. Die Zwischenwände 39, 40 enden mit Abstand von der Querwand 41.

Die Zwischenwände 39, 40 schließen mit ihrem von der Querwand 41 abgewandten Ende an eine Querwand 42 an, die sich parallel zur Querwand 41 zwischen der Zwischendecke 7 und der Decke 6 erstreckt. Die Zwischenwände 39, 40 und die Querwand 42 begrenzen einen Aggregatraum 43, in dem das Kühlregister 38 sowie ein Ventilator 44 mit Motor 44a untergebracht sind. Der Ventilator 44 liegt mit Abstand vom Kühlregister 38 und saugt durch eine Öffnung 45 in der Querwand 42 die Kühlluft an und fördert sie dem Kühlregister 38 zu.

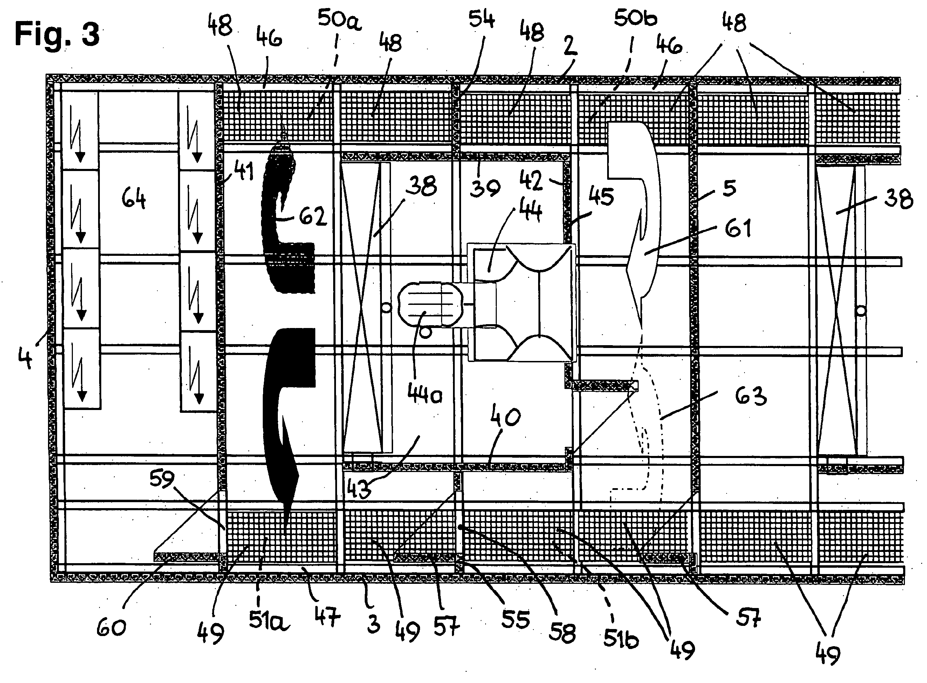

Die beiden Zwischenwände 39, 40 liegen mit Abstand zu den Seitenwänden 2, 3 des Gehäuses 1. Dadurch werden Strömungsräume 46 und 47 gebildet, die sich im Bereich oberhalb der Strömungsräume 30, 31 in der Produktebene 8 (Fig. 1) erstrecken. Die übereinander liegenden Strömungsräume 30, 46 und 31, 47 sind durch mit geringem Abstand hintereinander liegende Gitterroste 48, 49 (Fig. 3) voneinander getrennt. Die Gitterroste 48, 49 erstrecken sich längs der Seitenwände 2, 3 im Bereich zwischen der Querwand 41 und der Stirnwand 5.

Im Bereich unterhalb der Gitterroste 48, 49 befinden sich Klappen 50a, 50b, 51a, 51b (Fig. 1 und 3), die um in Längsrichtung des Gehäuses 1 liegende horizontale Achsen 52, 53 schwenkbar sind. Die Klappen 50a, 50b, 51a,51b können aus einer Schließstellung, in der sie den Durchlaß zwischen den beiden übereinander liegenden Strömungsräumen 30, 46 und 31, 47 schließen, in eine Freigabestellung verschwenkt werden. Im Ausführungsbeispiel liegen die Schwenkachsen 52, 53 in halber Breite der Klappen 50a, 50b, 51a, 51b, so daß die Klappen innerhalb kurzer Zeit in die Offen- bzw. die Schließstellung geschwenkt werden. Es ist selbstverständlich möglich, die Schwenkachsen 52, 53 auch an einem Rand der Klappen 50a, 50b, 51a, 51b vorzusehen. Die Klappen können nur einen Flügel haben. Es ist ferner möglich, die Klappen als mehrflügelige Lamellenklappen auszubilden. Solche Klappen haben einzelne Lamellen, die in Schließstellung die Durchtrittsöffnungen verschließen und zum Öffnen jeweils um eine Achse in die Offenstellung schwenken.

Die Zwischenwände 39, 40 (Fig. 3) sind in halber Länge durch eine Querwand 54, 55 mit den Seitenwänden 2, 3 verbunden. In der Querwand 55 befindet sich eine Tür 57, mit der eine Durchtrittsöffnung 58 in den Querwänden 54, 55 geschlossen wird. Zu Wartungszwecken kann die Tür 57, wie dargestellt, geöffnet werden.

Eine weitere Öffnung 59, die durch eine weitere Tür 60 verschließbar ist, befindet sich in der Querwand 41 vor jeder Reihe von Gitterrosten 48 und 49.

Zum Kühlen des in den Lagerplätzen 18, 19 in der Produktebene 8 befindlichen Gutes 22, 23 wird die Klappe 50a unterhalb der Gitterroste 48 und vor der Querwand 54 zunächst geschlossen, während die Klappe 51a der gegenüberliegenden Gitterroste 49 geöffnet wird. Die Kühlluft, die aus dem Kühlregister 38 austritt, strömt in den Strömungsraum 47 und von dort durch die geöffnete Klappe 51a nach unten in den Strömungsraum 31. Von hier aus strömt die Kühlluft durch die Gitterroste 49 und die geöffnete Klappe 51a in den Strömungsraum 31. Das Gut 23 wird dabei von der Rückseite aus mit der Kühlluft beaufschlagt, die in Richtung auf den die Transporteinrichtung 10 enthaltenden Mittelbereich der Produktebene 8 strömt. Von hier aus strömt die Kühlluft weiter zu den gegenüberliegenden Lagerplätzen 18 und das darauf gelagerte Gut 22. Es wird somit ebenfalls gekühlt. Die Kühlluft gelangt dann in den Strömungsraum 30. Die Kühlluft strömt in diesem Raum 30 so weit nach hinten, bis sie, angesaugt durch den Ventilator 44, im Bereich hinter der Querwand 54 durch die dort geöffnete Klappe 50b aufwärts in den Raum 46 strömen kann (Fig. 3). Die im Bereich vor der Querwand 54 befindliche Klappe 50a ist geschlossen. Die im Raum 46 befindliche Kühlluft wird, wie durch den Strömungspfeil 61 angedeutet, durch die Öffnung 45 in der Querwand 42 vom Ventilator 44 angesaugt. Er fördert die Luft wieder in Richtung auf das Kühlregister 38, in dem die Luft erneut gekühlt und in der beschriebenen Weise dem Lagergut 22, 23 in der Produktebene 8 zugeführt wird. Durch den beschriebenen Kreislauf der Kühlluft wird eine optimale Kühlung des Lagergutes erreicht.

Damit nicht nur das im Strömungsweg der Kühlluft vom Kühlregister 38 am nächsten liegende Lagergut 23 zuerst mit dem Kühlluftstrom beaufschlagt wird, ist es möglich, die Kreislaufrichtung umzuschalten. In diesem Falle wird die im Bereich vor der Querwand 55 befindliche Klappe 51 a unterhalb der Gitterroste 49 geschlossen. Dafür wird die entsprechende gegenüberliegende Klappe 50a unterhalb der Gitterroste 48 geöffnet. Nunmehr strömt die Kühlluft nach dem Durchtritt durch das Kühlregister 38 in Strömungsrichtung 62 in den Strömungsraum 46 und gelangt über die gesamte Länge des Strömungsraumes 46 über die geöffnete Klappe 50a unterhalb der Gitterroste 48 in den Strömungsraum 30. Von hier aus kann die Kühlluft von der Rückseite der Lagerplätze 18 aus über das Gut 22 strömen und es kühlen. Die Kühlluft gelangt dann an das Lagergut 23, das ebenfalls gekühlt wird. Die Kühlluft strömt dann in den Strömungsraum 31. In ihm strömt die Kühlluft in den Bereich hinter der Querwand 55 (Fig. 3). Die Klappe 51b unterhalb des Gitterrostes 49 ist geöffnet, während die in Strömungsrichtung vor der Querwand 55 liegende Klappe 51a geschlossen ist. Somit strömt die Kühlluft durch die geöffnete Klappe 51b nach oben in den Raum 47, in dem diese Kühlluft, wie durch den Strömungspfeil 63 in Fig. 3 angegeben, durch die Öffnung 45 in der Querwand 42 zum Ventilator 44 strömt. Er fördert die Kühlluft wiederum dem Kühlregister 38 zu, in dem die Kühlluft wieder auf die erforderliche Kühltemperatur abgekühlt wird, bevor sie in Strömungsrichtung 62 erneut in den Strömungskreislauf gefördert wird.

Die Umschaltung der Strömungsrichtung erfolgt vorteilhaft in vorgegebenen Zeitabständen, so daß sowohl das Lagergut 22 als auch das Lagergut 23 optimal gekühlt wird. Die Umschaltung der verschiedenen Klappen 50a, 50b, 51 a, 51 b erfolgt automatisch.

In der in Fig. 3 dargestellten Lage ist die im Bereich der Seitenwand 2 befindliche Klappe 50a geschlossen, während die Klappe 50b hinter der Querwand 54 geöffnet ist. Die Kühlluft kann darum nur im Bereich zwischen der Querwand 54 und der Stirnwand 5 durch die dort geöffnete Klappe 50b nach oben durch den Gitterrost 48 in Strömungsrichtung 61 zum Ventilator 44 strömen. Entsprechende Verhältnisse bestehen dann, wenn die Strömungsrichtung umgeschaltet wird. In diesem Falle ist die unterhalb der Gitterroste 49 liegende Klappe 51a geschlossen, während die Klappe 51b geöffnet ist, so daß an dieser Stelle die Kühlluft durch den Gitterrost 49 in Strömungsrichtung 63 zum Ventilator 44 strömen kann.

Im Bereich zwischen der Stirnwand 4 und der Querwand 41 befindet sich auf der Aggregatebene 9 eine elektrische Versorgungseinrichtung 64 für die Kühlvorrichtung.

Je nach zu kühlendem Gut kann die Kühlvorrichtung aus mehreren hintereinander geschalteten Kühleinheiten bestehen, wie dies in Fig. 3 angedeutet ist. Von der zweiten Kühleinheit ist das weitere Kühlregister 38 zu erkennen. Die Kühleinheiten sind vorteilhaft gleich ausgebildet.

Im dargestellten und beschriebenen Ausführungsbeispiel ist die Kühlvorrichtung mit einer einzigen Transporteinrichtung 10 versehen, die sich zwischen den Lagerplätzen 18, 19 erstreckt. Die Kühlvorrichtung kann auch zwei oder mehr parallel zueinander liegende Transporteinrichtungen 10 aufweisen, zu deren beiden Seiten die Lagerplätze für das zu kühlende Gut angeordnet sind. Die beschriebene Kühlluftführung erfolgt auch in diesem Falle in der beschriebenen Weise.

Es ist ferner möglich, nur an einer Seite der Transporteinrichtung 10 Lagerplätze für das zu kühlende Gut vorzusehen.

Zumindest die Außenwände 2 bis 6 des Gehäuses 1 bestehen aus wärmeisolierendem Material. Vorteilhaft sind auch die innerhalb des Gehäuses 1 vorgesehenen Quer- und Zwischenwände aus einem entsprechenden isolierenden Material gefertigt. Der Boden 65 (Fig. 1) ist so wärmeisoliert, daß eine Kondensation vermieden wird. Der Boden 65 fällt in Richtung auf die Längsmittelebene der Kühlvorrichtung ab. Im Scheitelpunkt befindet sich eine Ablaufrinne 66, in der mindestens ein Bodenablauf 67 mit einem angeschlossenen Siphon 68 vorgesehen ist. Die Ablaufrinne 66 befindet sich in halber Breite der Transporteinrichtung 10.

Im Strömungsraum 46 ist wenigstens eine Kabeltrasse 69 untergebracht. Außerdem ist im Strömungsraum 46 im Deckenbereich eine Beleuchtung 70 vorgesehen. Im gegenüberliegenden Strömungsraum 47 befindet sich wenigstens eine Rohrtrasse 71 für die innere Verrohrung. Außerdem weist der Strömungsraum 47 ebenfalls eine Beleuchtung 72 auf.

Die Kühlvorrichtung zeichnet sich durch einen geringen Aufwand in der Antriebs- und Steuerungstechnik aus. Während des Kühlvorganges ruht das Lagergut 22, 23, so daß das Gehäuse 1 keine große Länge für die ausreichende Kühlung aufweisen muß. Die ruhende Lagerung des zu kühlenden Gutes hat den Vorteil, daß dieses Gut während des Kühlvorganges nicht bewegt wird, was bei empfindlichen Gütern, wie beispielsweise geschichteten Süßspeisen oder stichfestem Joghurt, von Nachteil wäre. Von der Transporteinrichtung 10 aus läßt sich das zu kühlende Gut 22, 23 leicht auf die Lagerplätze 18, 19 bewegen. Die Produktverfolgung innerhalb der Kühlvorrichtung ist einfach und zuverlässig möglich. Es sind keine zusätzlichen Eckumsetzer oder Drehtische erforderlich, um das Gut durch die Kühlvorrichtung zu transportieren. Außerdem entfallen Drehtische oder Eckumsetzer zur Entnahme oder Übergabe des Gutes 22, 23 außerhalb der Kühlvorrichtung. Die Kühlvorrichtung kann jederzeit erweitert werden, indem weitere Kühlvorrichtungen an eine bestehende Kühlvorrichtung angesetzt werden. Die Transporteinrichtung 10 wird in diesem Falle entsprechend verlängert, wobei in der Stirnwand 5 des Gehäuses 1 eine entsprechende Durchtrittsöffnung für das Schienenfahrzeug 13 vorgesehen wird. Sobald das jeweilige Gut ausreichend gekühlt ist, wird es vom Lagerplatz 18, 19 auf die Transporteinrichtung 10 gefördert, mit der es aus der Kühlvorrichtung herausgeführt wird. Dasjenige Gut, das noch länger gekühlt werden muß, bleibt auf seinem Lagerplatz 18, 19. Während des Kühlprozesses kann neues Gut auf die Lagerplätze 18, 19 transportiert werden.

## Patentansprüche

1. Verfahren zum Kühlen von Gut, insbesondere von Lebensmitteln, vorzugsweise von Molkereiprodukten, bei dem das Gut mit wenigstens einer Transporteinnchtung (10) transportiert und einem Kühlstrom ausgesetzt wird, **dadurch gekennzeichnet, daß** das Gut (22, 23) mit der Transporteinrichtung (10) zu einem Lagerplatz (18, 19)eines Kühltunnels transportiert wird, an dem das Gut (22, 23) während der Kühlung ruht und wobei der Kühlstrom quer zur Transportrichtung (15) dem Gut (22, 23) zugeführt wird.

2. Verfahren nach Anspruch 1, **dadurch gekennzeichnet, daß** das Gut (22, 23) zur Kühlung quer zur Transportrichtung (15) auf den Lagerplatz (18, 19) transportiert wird

3. Verfahren nach Anspruch 1 oder 2, **dadurch gekennzeichnet, daß** die Transporteinrichtung (10) unabhängig vom Kühlprozeß das Gut (22, 23) zum Lagerplatz (18, 19) transportiert oder es vom Lagerplatz (18, 19) aufnimmt.

4. Verfahren nach einem der Ansprüche 1 bis 3, **dadurch gekennzeichnet, daß** das Gut (22, 23) zu beiden Seiten der Transporteinrichtung (10) für die Kühlung gelagert wird.

5. Verfahren nach einem der Ansprüche 1 bis 4, **dadurch gekennzeichnet, daß** der Kühlstrom im Kreislauf geführt wird.

6. Verfahren nach einem der Ansprüche 1 bis 5, **dadurch gekennzeichnet, daß** die Strömungsrichtung des Kühlstromes umschallbar ist.

7. Kühltunnel zur Durchführung des Verfahrens nach einem der Ansprüche 1 bis 6, mit wenigstens einer Transporteinrichtung für das zu kühlende Gut und wenigstens einer Kühleinheit,**dadurch gekennzeichnet, daß** neben der Transporteinrichtung (10) Lagerplätze (18, 19) für das Gut (22, 23) vorgesehen sind, auf die das Gut (22, 23) mit wenigstens einer Transporteinheit (14) transportiert wird, wobei ein Kühlstrom durch einen ventilator quer zur Transportrichtung (15) dem Gut (22, 23) zugeführt wird.

8. Kübitunnel nach Anspruch 7 **dadurch gekennzeichnet, daß** beiderseits der Transporteinrichtung (10) Lagerplätze (18, 19) vorgesehen sind.

9. Kühltunnel nach Anspruch 7 oder 8, **dadurch gekennzeichnet, daß** die Transporteinrichtung (10) wenigstens ein vorzugsweise als Schienenfahrzeug ausgebildetes Fahrzeug (13) aufweist, auf dem vorteilhaft die Transporteinheit (14) vorgesehen ist.

10. Kühltunnel nach einem der Ansprüche 7 bis 9, **dadurch gekennzeichnet, daß** die Transporteinheit (14) drehbar angetriebene Rollen (17) aufweist.

11. Kühltunnel nach einem der Ansprüche 7 bis 10, **dadurch gekennzeichnet, daß** die Lagerplätze (18,19) drehbare vorteilhaft parallel zu den Rollen (17) der Transporteinheit (14) liegende Rollen (20, 21) aufweisen.

12. Kühltunnel nach einem der Ansprüche 7 bis 11,**Dadurch gekennzeichnet, daß** die Kühleinheit (38, 44) und die Transporteinrichtung (10) mit den Lagerplätzen (18, 19) räumlich voneinander getrennt sind.

13. Kühltunnel nach einem der Ansprüche 7 bis 12, **dadurch gekennzeichnet, daß** dic Kühleinheit (38, 44) im Bereich oberhalb der Transporteinrichtung (10) und der Lagerplätze (18, 19) angeordnet ist.

14. Kühltunnel nach einem der Ansprüche 7 bis 13, **dadurch gekennzeichnet, daß** die Kühleinheit (38, 44) durch wenigstens ein Kühlregister (38) und wenigstens einen vorgeschalteten Ventilator (44) gebildet ist.

15. Kühltunnel nach einem der Ansprüche 7 bis 14, **dadurch gekennzeichnet, daß** in Strömungsrichtung der Kühlluft hinter der Kühleinheit (38, 44) wenigstens ein Strömungsraum (46, 47) liegt, der vorteilhaft mit mindestens einem gutseitigen Strömungsraum (30, 31) strömungsverbunden ist.

16. Kühltunnel nach Anspruch 15, **dadurch gekennzeichnet, daß** die Strömungsverbindung zwischen den Strömungsräumen (30, 31; 46, 47) wahlweise vorteilhaft durch Klappen (50a, 50b, 51a, 51b) verschließbar ist.

## Claims

1. A method for cooling products, in particular food, preferably dairy products, in which the product is conveyed with at least one conveying device (10) and is subjected to a cooling flow, **characterized in that** the product (22, 23) is conveyed with the conveying device (10) to a storage place (18, 19) of a cooling tunnel where the product (22, 23) rests during the cooling and the cooling flow is supplied to the product (22, 23) transversally to the conveying direction.

2. A method according to claim 1, **characterized in that** the product (22, 23) is conveyed for cooling transversally to the conveying direction (15) to the storage place (18, 19).

3. A method according to claim 1 or 2, **characterized in that** irrespective of the cooling process the conveying device (10) conveys the product (22, 23) to the storage place (18, 19) or receives it from the said storage place (18, 19).

4. A method according to one of the claims 1 to 3, **characterized in that** the product (22, 23) is stored at both sides of the conveying device (10) for cooling.

5. A method according to one of the claims 1 to 4, **characterized in that** the cooling flow is guided in a circulation.

6. A method according to one of the claims 1 to 5, **characterized in that** the direction of the flow of the cooling flow can be changed over.

7. A cooling tunnel for performing the method according to one of the claims 1 to 6, comprising at least one conveying device for the product to be cooled and at least one cooling unit, **characterized in that** in addition to the conveying device (10) there are provided storage places (18, 19) for the product (22, 23) on which the product (22, 23) is conveyed with at least one transporting unit (14), with a cooling flow being supplied to the product (22, 23) by a fan transversally to the conveying direction (15).

8. A cooling tunnel according to claim 7, **characterized in that** storage places (18, 19) are provided on both sides of the conveying device (10).

9. A cooling tunnel according to claim 7 or 8, **characterized in that** the conveying device (10) comprises at least one vehicle (13) which is preferably configured as a rail vehicle and on which the conveying unit (14) is advantageously provided.

10. A cooling tunnel according to one of the claims 7 to 9, **characterized in that** the conveying device (14) comprises rotatably driven rolls (17).

11. A cooling tunnel according to one of the claims 7 to 10, **characterized in that** the storage places (18, 19) comprises rotatable rolls (20, 21) which advantageously lie parallel to the rolls (17) of the conveying unit (14).

12. A cooling tunnel according to one of the claims 7 to 11, **characterized in that** the cooling unit (38, 44) and the conveying device (10) with the storage places (18, 19) are spatially separated from each other.

13. A cooling tunnel according to one of the claims 7 to 12, **characterized in that** the cooling unit (38, 44) is arranged in the region above the conveying device (10) and the storage places (18, 19).

14. A cooling tunnel according to one of the claims 7 to 13, **characterized in that** the cooling unit (38, 44) is formed by at least one cooling register (38) and at least one upstream fan (44).

15. A cooling tunnel according to one of the claims 7 to 14, **characterized in that** at least one flow chamber (46, 47) is disposed behind the cooling unit (38, 44) in the direction of flow of the cooling air, which flow chamber is advantageously flow-connected with at least one flow chamber (30, 31) on the product side.

16. A cooling tunnel according to claim 15, **characterized in that** the flow connection between the flow chambers (30, 31; 46, 47) can be sealed by flaps (50a, 50b, 51 a, 51 b) optionally in an advantageous manner.

## Revendications

1. Procédé de refroidissement de produits, notamment de produits alimentaires, de préférence de produits laitiers, selon lequel les produits sont transportés moyennant au moins un système de convoyage (10) et sont exposés à un courant d'air froid, **caractérisé en ce que** les produits (22, 23) sont transportés par le système de convoyage (10) à un emplacement de stockage (18, 19) dans un tunnel de refroidissement où ils (22, 23) reposent pendant le refroidissement, le courant d'air froid étant acheminé jusqu'aux produits (22, 23) en travers du sens de convoyage (15).

2. Procédé selon la revendication 1, **caractérisé en ce que** les produits (22, 23) sont transportés à l'emplacement de stockage (18, 19) en travers du sens de convoyage (15) en vue de leur refroidissement.

3. Procédé selon la revendication 1 ou 2, **caractérisé en ce que** le système de convoyage (10) transporte les produits (22, 23) jusqu'à l'emplacement de stockage (18, 19) ou les en (22, 23) évacue indépendamment du processus de refroidissement.

4. Procédé selon l'une quelconque des revendications 1 à 3, **caractérisé en ce que** les produits (22, 23) sont stockés des deux côtés du système de convoyage (10) en vue de leur refroidissement.

5. Procédé selon l'une quelconque des revendications 1 à 4, **caractérisé en ce que** le courant d'air froid est mis en circuit.

6. Procédé selon l'une quelconque des revendications 1 à 5, **caractérisé en ce que** le sens d'écoulement du courant d'air froid peut être inversé.

7. Tunnel de refroidissement destiné à mettre en oeuvre le procédé selon l'une quelconque des revendications 1 à 6, avec au moins un système de convoyage pour les produits qu'il y a lieu de réfrigérer et au moins une unité de refroidissement, **caractérisé en ce que** sont prévus, outre le système de convoyage (10), des emplacements de stockage (18, 19) des produits (22, 23) sur lesquels les produits (22, 23) sont transportés moyennant au moins une unité de convoyage (14), un courant d'air froid étant amené jusqu'aux produits (22, 23) en travers du sens de convoyage (15) par un ventilateur.

8. Tunnel de refroidissement selon la revendication 7, **caractérisé en ce que** des emplacements de stockage (18, 19) sont prévus des deux cotés du système de convoyage (10).

9. Tunnel de refroidissement selon la revendication 7 ou 8, **caractérisé en ce que** le système de convoyage (10) comporte au moins un véhicule (13) de préférence conformé en forme de véhicule sur rails sur lequel est avantageusement prévue l'unité de convoyage (14).

10. Tunnel de refroidissement selon l'une quelconque des revendications 7 à 9, **caractérisé en ce que** l'unité de convoyage (14) comporte des rouleaux (17) entraînés mobiles en rotation.

11. Tunnel de refroidissement selon l'une quelconque des revendications 7 à 10, **caractérisé en ce que** les emplacements de stockage (18, 19) comportent des rouleaux (20, 21) mobiles en rotation, avantageusement parallèles aux rouleaux (17) de l'unité de convoyage (14).

12. Tunnel de refroidissement selon l'une quelconque des revendications 7 à 11, **caractérisé en ce que** l'unité de refroidissement (38, 44) et le système de convoyage (10) avec les emplacements de stockage (18, 19) sont espacés l'une de l'autre.

13. Tunnel de refroidissement selon l'une quelconque des revendications 7 à 12, **caractérisé en ce que** l'unité de refroidissement (38, 44) est disposée dans la zone située au-dessus du système de convoyage (10) et des emplacements de stockage (18, 19).

14. Tunnel de refroidissement selon l'une quelconque des revendications 7 à 13, **caractérisé en ce que** l'unité de refroidissement (38, 44) est formée par au moins un accumulateur frigorifique (38) et au moins un ventilateur (44) monté en amont.

15. Tunnel de refroidissement selon l'une quelconque des revendications 7 à 14, **caractérisé en ce qu'**au moins une enceinte d'écoulement (46, 47) se situe en aval de l'unité de refroidissement (38, 44), pris dans le sens de l'écoulement de l'air froid, cette enceinte d'écoulement communiquant avantageusement, en termes d'écoulement, avec au moins une enceinte d'écoulement (30, 31) située du côté des produits.

16. Tunnel de refroidissement selon la revendication 15, **caractérisé en ce que** la communication, en termes d'écoulement, entre les enceintes d'écoulement (30, 31 ; 46, 47) est avantageusement apte à être fermée sélectivement par des clapets (50a, 50b, 51a, 51b).
